# EUROPÄISCHE PATENTSCHRIFT

(11) **EP 2 468 108 B1**
(45) Veröffentlichungstag und Bekanntmachung des Hinweises auf die Patenterteilung: **22.10.2014**
(21) Anmeldenummer: 11193981.5
(22) Anmeldetag: 16.12.2011
(51) Int. Cl.: A23G 1/00, A23L 1/00, A23G 1/54

(54) **Verfahren zur Herstellung einer gefüllten Schokoladenware**
Process for the production of filled chocolate products
Procédé pour la production de produits de chocolat remplis

(30) Priorität: 22.12.2010 AT 21132010
(43) Veröffentlichungstag der Anmeldung: 27.06.2012
(73) Patentinhaber: Zotter Holding GmbH & Co KG, 8333 Kornberg bei Riegersburg (AT)
(72) Erfinder: Zotter, Josef, 8200 Gleisdorf (AT)
(74) Vertreter: Bachinger-Fuchs, Eva-Maria

(56) Entgegenhaltungen:
- EP-A1- 0 838 157
- DE-A1- 4 421 439
- DE-C- 521 533
- DE-C- 646 802
- US-A1- 2003 232 113
- Anonymous: "Customized chocolate bars from chocri: organic, fair trade & delicious chocolate made for you", , 9. April 2010 (2010-04-09), Seiten 1-1, XP002669081, Gefunden im Internet: URL:http://www.youtube.com/watch?v=6tVd1p4 n2S8&feature=related [gefunden am 2012-02-07]
- "Curry Schokolade mit Cashewkernen" In: Kay-Henner Menge: "Schokoladetafeln selbstgemacht", 14. September 2009 (2009-09-14), südwest, XP002669082, Seiten 16-16, * das ganze Dokument *
- Anonymous: "Schokoladentafeln selbst gemacht", , 21. Dezember 2010 (2010-12-21), Seiten 1-2, XP002669083, Gefunden im Internet: URL:http://mal-kurz-in-der-kueche.blogspot .com/2010/12/schokoladentafeln-selbst-gema cht.html [gefunden am 2012-02-08]

## Beschreibung

Die Erfindung betrifft ein Verfahren zur Herstellung einer gefüllten Schokoladenware, insbesondere von Tafelschokolade.

Im Stand der Technik sind im wesentlichen drei Verfahren zur industriellen Herstellung von gefüllter Schokolade bekannt. Das älteste Verfahren ist das sogenannte "Wendeverfahren", das bei mittleren und großen Produktionsanlagen mit einem Ausstoß von mehr als 500 kg/h angewandt wird. Hierbei wird zunächst nur die Schokolade in die Form dosiert, danach wird die Form gewendet, wodurch nur ein Teil der noch flüssigen Schokoladenmasse an den Wänden der Form zurückbleibt. Nach dem Abkühlen wird schließlich die entstandene Schokoladenhülse mit der gewünschten Füllung versehen und nach einem weiteren Kühlvorgang der Deckel, der eigentlich der Boden der Tafel oder Praline ist, dosiert. Beim Wendeverfahren müssen die Produkte somit nach dem Dosieren der Hülse, der Füllung und des Deckels jeweils gekühlt werden.

Eine weitere Möglichkeit zur Erzeugung gefüllter Schokoladeprodukte stellt das heutzutage bei weitem gängigste One-Shot-Verfahren dar. Dieses bezeichnet ein Verfahren, bei dem Hülle und Füllung gleichzeitig in einem Arbeitsgang in die Form gebracht werden. Über eine außenliegende Ringdüse wird die Schokolade und über eine innerhalb der Ringdüse liegende Füllungsdüse wird in einem geringen Zeitabstand die Füllung dosiert. Der Vorteil dieses Verfahrens besteht darin, dass nur mehr ein einziger Kühlvorgang erforderlich ist. Allerdings gibt es auch zahlreiche Nachteile. So erfordert diese Technik einen hohen technologischen Aufwand zum Dosieren von Schokolade und Füllung im gleichen Arbeitsgang. Darüber hinaus ist zu beachten, dass bei weitem nicht jede Schokoladen- oder Füllmasse one-shotfähig ist, so dass bestehende Rezepturen in der Regel hinfällig sind oder zumindest angepasst werden müssen.

Die Eigenschaften der Füllung, wie spezifisches Gewicht und Fließeigenschaften, dürfen nicht sehr weit von jener der Schokolade abweichen. Da spezifische Gewicht sollte also bei etwa 1,2 kg/l liegen. Gleiches gilt für die Temperatur der Füllung und jener der vorkristallisierten Schokolade, so dass die Füllung im wesentlichen der Schokoladentemperatur ensprechen muss oder maximal bis zu 2 Grad darunter liegen darf.

Ferner darf die Füllung beim One-Shot-Verfahren keine Fäden ziehen, da diese beim Schließen des Produkts durch den Boden gehen können, was später zum Austreten der Füllung führen kann,und keine größeren festen Bestandteile, z.B. Nussstückchen, enthalten (maximal etwa 1,5 mm). Es können außerdem Probleme mit Luftblasen auftreten.

Das Verfahren ist weiters empfindlich gegenüber Schwankungen der Betriebsbedingungen. So dürfen beispielsweise die Temperaturen und der Kristallisationsgrad von Schokolade und die Temperatur der Füllung nur in engem Rahmen schwanken, da es sonst zu hohen Ausschussquoten kommen kann. Da die komplette Schokoladenware gekühlt wird, muss die Kühlung aufgrund des veränderten Kontraktionsverhaltens langsamer und schonender erfolgen als beim klassischen Verfahren. Anderenfalls kann es zu Ausschuss kommen, wenn sich Schale oder Füllung nicht gleichmäßig zusammenziehen (Platzen, Wölbung des Bodens, Haarrisse).

Als drittes Verfahren wird bei mittleren und kleinen Produktionsmengen zur Hülsenbildung auch das Kaltstempeln angewandt. Hierbei wird nach dem Dosieren der Schokolade ein gekühlter Stempel in die Form eingedrückt. Dadurch wird die eindosierte Schokolade zur Hülse ausgeformt und gleichzeitig verfestigt. Anschließend kann die Füllung in die Schokoladehülse dosiert und das Produkt nach einem weiteren Kühlvorgang gedeckelt werden.

Nachteilig ist, dass der Energieaufwand bei diesem Verfahren relativ hoch ist, um die warme Schokolade in adäquater Zeit derart abzukühlen, dass die erzeugte Hülse stabil bleibt. Außerdem muss dafür gesorgt werden, dass keine Luftfeuchtigkeit auf dem Kaltstempel kondensieren kann, da sonst die erzeugte Schokoladehülse beim Wiederanheben des Stempels aus der Form gezogen werden könnte.

Eine anderes Verfahren wird bei der Herstellung von handgeschöpfter Schokolade angewandt. Bei deren Fertigung kann auf Gussformen verzichtet werden, da die Kuvertüre, in der Regel mittels Kelle und Rolle, in einer dünnen Schicht auf Bahnen aufgetragen wird. Auf diese Schokoladebahnen wird/werden dann die Füllung/en aufgestrichen, welche dann mit einer weiteren Küvertüreschicht abgedeckt wird/werden. Nach dem Schneiden der Bahnen in die gewünschte Form werden die Produkte in flüssige Schokolade getunkt und eingehüllt. Dieses Verfahren ist mit einem hohen technischen oder personellen sowie einem erheblichen Zeitaufwand verbunden.

In der DE 199 40 747 A wird eine gefüllte Schokolade beschrieben, bei welcher die Füllung in eine keksartige Einlage eingepresst ist, welche ihrerseits von einem Hohlkörper aus Schokolade umhüllt ist.

Die GB 840390 A beschreibt ein Verfahren zur Herstellung eines gefüllten Schokoladenprodukts, bei dem ein vorgefertigter Zuckerhohlkörper mit der Füllung befüllt und danach mit Schokolade beschichtet wird.

Die DE 521 533 C beschreibt die Herstellung einer gefüllten Schokoladeware mit einer vollständig von Schokolade umhüllten Füllung, wobei die Formen mit flüssiger Schokoladenmasse befüllt bzw. ausgestrichen werden, ein Teil der Schokoladenmasse wieder aus der Form entnommen, danach die Füllung in die Form eingebracht und eingedrückt und vor dem Kühlen Schokolademasse zwecks vollständigen Verschlusses der Schokoladehülle aufgebracht wird.

Die Erfindung bezweckt die Vermeidung der oben genannten Nachteile des Standes der Technik und stellt sich die Aufgabe, ein Verfahren zur Herstellung einer gefüllten Schokoladenware bereitzustellen, das eine rasche und in Hinblick auf die Füllung individuelle Produktion gestattet und weder einen hohen technischen oder energetischen Aufwand noch viel Zeit erfordert. Insbesondere soll das Erfordernis einer mehrmaligen Kühlung des Produkts und die bei der gleichzeitigen Kühlung von Schokolade und Füllung auftretenden Problematik vermieden werden.

Diese Aufgabe wird bei einem Verfahren zur Herstellung einer gefüllten Schokoladenware erfindungsgemäß dadurch gelöst, dass mindestens eine Füllung in Form einer vorgefertigten festen Einlage mit einer Temperatur, die unter jener von flüssiger Schokolade liegt, gänzlich durch Eindrücken in der flüssigen Schokolade untergetaucht wird, wobei der Vorgang des Eindrückens händisch oder maschinell erfolgt, und die derart vervollständigte Schokoladenware danach bis zum Erstarren gekühlt wird. Dies bedeutet, dass die Einlage beim Eindrücken in die Schokolade eine Temperatur aufweist, die unter jener Temperatur liegt, bei welcher die Schokolade schmilzt, wobei die Schokolade grundsätzlich in einem bestimmten Temperaturbereich (abhängig von der Zusammensetzung) flüssig ist.

Es ist ferner zu verstehen, dass anders als bei Verfahren im Stand der Technik nach dem Eindrücken der Füllung erfindungsgemäß kein weiterer Schritt des Auffüllens der für die Herstellung der Schokoladenware verwendeten Form oder des Abdeckens der Füllung mit flüssiger Schokolade oder des Auftragens weiterer Schokoladenmasse erfolgt. Dies ist nicht erforderlich, da die erfindungsgemäße Maßnahme des Eindrückens/Untertauchens der Füllung bereits zu einer vollständigen Schokoladenware führt, die nur mehr gekühlt werden muss.

Wie bei handgeschöpften Schokoladen können nun auf einfache Weise verschiedene Füllungen zu einem Produkt kombiniert werden, indem zwei, drei oder mehr Einlagen hintereinander oder gleichzeitig in die Schokolade eingedrückt werden.

Durch die erfindungsgemäßen Maßnahmen kommt es zu einer beträchtlichen Verkürzung der Kühlzeit, da bereits "kalte" (d.h. erstarrte) Füllungen verwendet werden, die selbst nicht mehr bis zum Stocken gekühlt werden müssen, was Stunden in Anspruch nehmen kann.

Außerdem spielen Unterschiede im spezifischen Gewicht und in den Fließeigenschaften von Füllung und Schokoladenhülle keine Rolle, da nur die Schokolade im flüssigen Zustand vorliegt.

Das erfindungsgemäße Verfahren ist zudem wenig bzw. unempfindlich gegenüber Temperaturschwankungen und dem Kristallisationsgrad der Schokolade und der Temperatur der Füllungen.

In einer bevorzugten Ausführungsform wird die mindestens eine Füllung in vorgekühltem Zustand, vorzugsweise mit einer Temperatur im Bereich von -18°C bis 25°C, insbesondere im Bereich von 14°C bis 18°C, in der flüssigen Schokolade, die im Allgemeinen eine Temperatur von 28°C aufweist, untergetaucht. Hierdurch wird die Schokolade auch von innen gekühlt, was die zum Erstarren erforderliche Zeit weiter erheblich verringert.

Das Problem der bei tiefen Temperaturen der Füllung auftretenden Kondensation (Luftfeuchtigkeit) kann durch Anwendung verschiedener Techniken vermieden werden, z.B. durch Verwendung gefriergetrockneter Füllungen, welche Feuchtigkeit absorbieren können, oder durch Umhüllung mit feuchtigkeitsabsorbierenden Schichten, wie z.B. Puderzucker.

Erfindungsgemäß wird die mindestens eine Füllung in der flüssigen Schokolade untergetaucht, also gänzlich in die flüssige Schokolade eingedrückt, so dass sie von Schokolade bedeckt ist.

Der Vorgang des Eindrückens der Füllung in die flüssige Schokolade kann händisch oder maschinell erfolgen. Für eine raschere Durchführung wird die mindestens eine Füllung zweckmäßigerweise maschinell in die flüssige Schokolade eingedrückt. Dieser Vorgang kann auch leicht automatisiert werden, um die Produktion zu erhöhen.

Die mindestens eine Füllung ist vorzugsweise als Blatt oder Plättchen ausgebildet. In dieser Form lassen sich insbesondere Schokoladewaren mit schichtförmigen Füllungen in einfacher und rascher Weise herstellen. Auch kann das Blatt oder Plättchen seinerseits gefüllt sein, beispielsweise mit flüssigen Füllungen, die nur schwer in eine feste Form gebracht werden können.

Unter "Füllung" ist erfindungsgemäß eine Komponente zu verstehen, mit der eine Schokoladenware gefüllt ist (herkömmlich bedeutet dies, dass sich die Füllung vollständig im Inneren der Schokoladenware befindet und einen wesentlichen Teil des Volumens derselben ausmacht).

Vorzugsweise ist die mindestens eine Füllung aus der Gruppe, bestehend aus Schokolade, Marzipan, Nougat, Ganache und aromatisierter Ganache, Pralinen, Fruchtgelee, Fruchtmasse, Blüten, Krokant und in Folie eingeschweißten Botschaften, ausgewählt. Es sind jedoch alle möglichen anderen Füllungen denkbar, soweit sie als feste Einlage, unter Umständen auch nur durch Gefrieren, vorgefertigt werden können.

Durch die Erfindung wird es möglich, eine individuelle Gestaltung des Schokoladenprodukts vorzunehmen, da dieses innerhalb kürzester Zeit nach Wunsch aus den vorhandenen Einlagen zusammengestellt und gefertigt werden kann. Die Variationsmöglichkeiten sind ab einer gewissen Anzahl unterschiedlicher Füllungseinlagen praktisch unendlich.

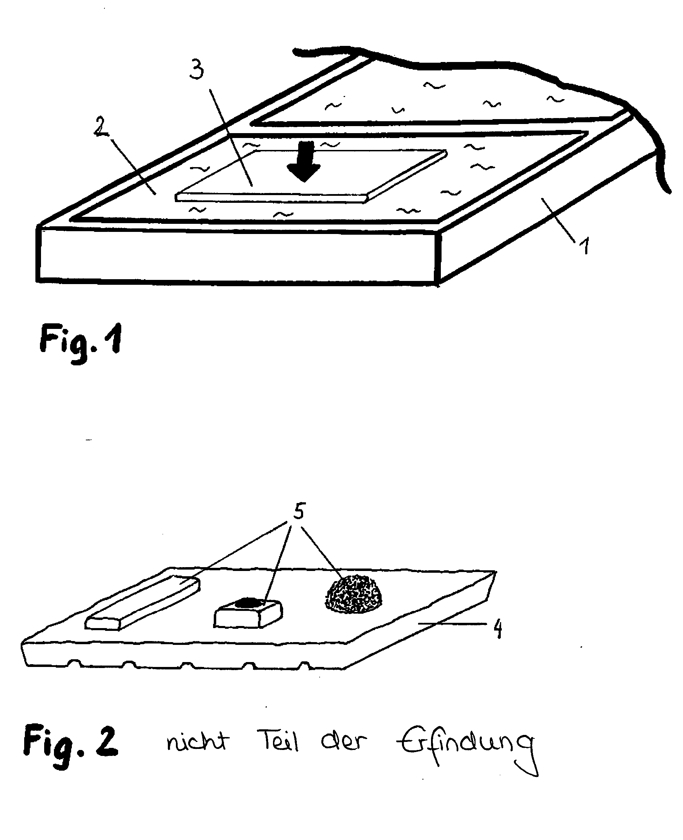

Die Erfindung wird nachfolgend anhand der Zeichnung näher erläutert, wobei Fig. 1 eine schematische Darstellung einer Ausführungsform des erfindungsgemäßen Verfahrens veranschaulicht und Fig. 2 das Endprodukt einer Ausführungsform zeigt, die nicht Teil der beanspruchten Erfindung ist.

In Fig. 1 ist eine Gießform 1 zur Herstellung mehrerer Schokoladetafeln dargestellt, in deren Vertiefungen sich flüssige Schokolade 2 befindet. In die flüssige Schokolade 2 wird nun eine Füllung in Form einer vorgefertigten festen Einlage 3, z.B. ein Plättchen aus Marzipan oder Krokant, welche eine Temperatur unter jener von flüssiger Schokolade (~ 28°C) aufweist, z.B. im Bereich von 14°C-18°C, eingedrückt, wie durch einen senkrechten Pfeil nach unten veranschaulicht wird. Je nach ausgeübtem Druck wird die Einlage 3 nur zum Teil in die flüssige Schokolade 2 gedrückt (nicht erfindungsgemäß) oder in der Schokolade 2 vollständig untergetaucht (erfindungsgemäß). Das Eindrücken kann sowohl manuell als auch maschinell mittels einer passenden Vorrichtung erfolgen. Es können auch zwei oder mehrere unterschiedliche Einlagen 3 gleichzeitig oder hintereinander in die flüssige Schokolade 2 eingedrückt werden, um eine komplexere Füllung zu erzielen.

Nach dem Eindrücken der Füllung(en) wird das Schokoladeprodukt gekühlt. Durch die im Vergleich zur flüssigen Schokolade geringere Temperatur der Füllung bzw. Einlage 3 wird der Erstarrungsprozess beschleunigt, da die Schokolade auch "von innen" gekühlt wird. Nach dem Erstarren bzw. Festwerden der flüssigen Schokolade 2 kann die Schokoladetafel in gewohnter Weise aus der Form entnommen werden.

In Fig. 2 ist ein fertiges Schokoladenprodukt gemäß einer Ausführungsform, die nicht Teil der beanspruchten Erfindung ist, dargestellt. Das Produkt besitzt im wesentlichen die Form einer Schokoladetafel 4, die an der in der Zeichnung dargestellten Unterseite die typischen Rippeneinkerbungen aufweist. An der Oberseite der Tafel sind mehrere vorgefertigte feste Einlagen 5 unterschiedlicher Art, z.B. eine Schokoladentrüffel, eine Praline sowie eine Fruchtgeleestange, zu sehen, die nur zum Teil in die Schokolade eingedrückt wurden und dadurch für eine individuelle Oberflächengestaltung der Tafel sorgen. Eine derartige Schokoladenware kann z.B. nach der zuvor getroffenen Auswahl des Konsumenten in Bezug auf die Füllungen und die Schokolade selbst (Bitterschokolade, Milchschokolade etc.) rasch einzeln hergestellt werden, so dass für den Konsumenten kaum Wartezeiten anfallen.

## Patentansprüche

1. Verfahren zur Herstellung einer gefüllten Schokoladenware, insbesondere von Tafelschokolade, **dadurch gekennzeichnet, dass** mindestens eine Füllung in Form einer vorgefertigten festen Einlage mit einer Temperatur, die unter jener von flüssiger Schokolade liegt, gänzlich durch Eindrücken in der flüssigen Schokolade untergetaucht wird, wobei der Vorgang des Eindrückens händisch oder maschinell erfolgt, und die derart vervollständigte Schokoladenware danach bis zum Erstarren gekühlt wird.

2. Verfahren nach Anspruch 1, **dadurch gekennzeichnet, dass** die mindestens eine Füllung in vorgekühltem Zustand, vorzugsweise mit einer Temperatur im Bereich von -18°C bis 25°C, insbesondere im Bereich von 14°C bis 18°C, in der flüssigen Schokolade untergetaucht wird.

3. Verfahren nach Anspruche 1 oder 2, **dadurch gekennzeichnet, dass** die mindestens eine Füllung als Blatt oder Plättchen ausgebildet ist.

4. Verfahren nach einem der Ansprüche 1 bis 3, **dadurch gekennzeichnet, dass** die mindestens eine Füllung aus der Gruppe, bestehend aus Schokolade, Marzipan, Nougat, Ganache und aromatisierter Ganache, Fruchtgelee, Fruchtmasse, Blüten, Krokant und in Folie eingeschweißten Botschaften, ausgewählt ist.

## Claims

1. A process for the production of a filled chocolate product, in particular chocolate in bar form, **characterized in that** at least one filling in the form of a prefabricated solid insert having a temperature which is below that of liquid chocolate is completely immersed in the liquid chocolate by being pressed in, wherein the process of pressing is effected by hand or by machine, and the chocolate product completed in this way is thereupon cooled to the point of solidification.

2. A process according to claim 1, **characterized in that** the at least one filling is immersed in the liquid chocolate in a precooled condition, preferably at a temperature ranging from -18°C to 25°C, in particular ranging from 14°C to 18°C.

3. A process according to claim 1 or 2, **characterized in that** the at least one filling is designed as a sheet or a small plate.

4. A process according to any of claims 1 to 3, **characterized in that** the at least one filling is selected from the group consisting of chocolate, marzipan, nougat, ganache and flavoured ganache, fruit jelly, fruit pulp, flowers, brittle and film shrink-wrapped messages.

## Revendications

1. Procédé de fabrication d'un article de chocolat fourré, notamment de chocolat en tablette, **caractérisé en ce qu'**au moins un remplissage, sous la forme d'un fourrage solide préalablement préparé à une température, qui se situe en dessous de celle du chocolat fondu, est totalement immergé dans le chocolat liquide par l'exercice d'une pression, le processus de l'exercice de la pression intervenant manuellement ou par une machine, et que l'article en chocolat ainsi élaboré est ensuite refroidi jusqu'à devenir rigide.

2. Procédé selon la revendication 1, **caractérisé en ce qu'**au moins un remplissage dans un état pré-refroidi, de préférence à une température dans l'intervalle entre - 18 °C et 25 °C, en particulier, dans l'intervalle entre 14 °C et 18 °C, est immergé dans le chocolat liquide.

3. Procédé selon les revendications 1 ou 2, **caractérisé en ce qu'**au moins un remplissage est conçu sous la forme d'une feuille ou d'une lamelle.

4. Procédé selon l'une des revendications 1 à 3, **caractérisé en ce qu'**au moins un remplissage est choisi dans le groupe constitué par le chocolat, le massepain, le nougat, la ganache et la ganache aromatisée, une gelée de fruit, une purée de fruit, des fleurs, le croquant et des messages enrobés dans un film.
